# DEMANDE DE BREVET EUROPEEN

(11) **EP 4 840 700 A1**
(43) Date de publication de la demande: **18.11.2026**
(21) Numéro de dépôt: 26170294.8
(22) Date de dépôt: 01.04.2026
(51) Int. Cl.: B60Q 3/80, B60K 35/22, B60K 35/40, B60Q 3/72

(54) **SYSTÈME ET PROCÉDÉ DE CONTRÔLE DE LUMINOSITÉ DANS UN HABITACLE DE VÉHICULE AUTOMOBILE**

(30) Priorité: 16.05.2025 FR 2505263
(71) Demandeur: Stellantis Auto SAS, 78300 Poissy (FR)
(72) Inventeur: DUMUR, DENIS, 78990 ELANCOURT (FR); JACQUEMARD, IVAN, 92130 ISSY LES MOULINEAUX (FR); PINTAT, BRUNO, 92160 ANTONY (FR); GUIDEZ, FREDERIC, 75015 PARIS 15 (FR); DELLA VOLPE, ANTONIO, 78330 FONTENAY LE FLEURY (FR)
(74) Mandataire: BCIP

(57) **Abrégé**

L'invention propose un véhicule automobile (10) comprenant : un habitacle (14) destiné à recevoir un conducteur dudit véhicule automobile ; un rétroviseur extérieur (24) avec un miroir (32) ; une vitre latérale (20) comprenant une zone de sécurité (34) configurée pour permettre une vision du rétroviseur extérieur (24) par le conducteur. Dans l'habitacle le véhicule automobile (10) comprend un dispositif lumineux (36) apte à émettre un rayonnement lumineux se réfléchissant contre la zone de sécurité (34) vers le conducteur ; un système de contrôle (30) du dispositif lumineux (36). Le système de contrôle (30) est configuré pour détecter un mouvement arrière en regard du miroir (32) ; puis pour réduire une intensité lumineuse du dispositif lumineux. L'invention propose également un procédé de contrôle de dispositif lumineux (36) dans un habitacle (14) de véhicule automobile (10).

## Description

L'invention concerne l'éclairage d'agrément d'un habitacle de véhicule automobile. L'invention traite de la gestion des reflets de sources lumineuses à l'intérieur d'un habitacle de véhicule automobile. L'invention concerne également la visibilité des rétroviseurs extérieurs de véhicule automobile. L'invention a pour objet un véhicule automobile. L'invention a également pour objet un procédé de contrôle de dispositif lumineux dans un habitacle de véhicule automobile.

Afin de visualiser l'environnement arrière, un véhicule automobile est équipé de rétroviseurs intérieurs et extérieurs. Grâce à un miroir orientable, le conducteur parvient à percevoir les automobilistes vers l'arrière lorsqu'il circule. Les rétroviseurs extérieurs permettent d'identifier les automobilistes dans l'environnement proche lors de manœuvre de changement de file. Ils permettent de positionner des obstacles lors de manœuvres de stationnement arrière.

Afin de soigner la qualité perçue, un véhicule automobile est muni d'éclairages d'ambiance dans l'habitacle. L'éclairage d'ambiance est également désigné en tant qu'éclairage d'agrément. Cet éclairage doux contribue au rendu visuel pour les passagers. Il éclaire, notamment via une lumière rasante, les surfaces de l'habitacle.

La technologie utilisant une matrice à haute densité de diodes électroluminescentes, généralement désignées par l'acronyme « LED », permet d'afficher des animations ou des informations sur des surfaces rétroéclairées. Ces surfaces sont étendues et présentent un niveau de définition et un niveau de puissance d'éclairage élevé. Cependant, des effets négatifs peuvent apparaitre lorsqu'ils se réfléchissent sur des zones utiles à la conduite. Les reflets gênent alors la visibilité sur des surfaces de vitrage. Différents procédés visent à préserver la sécurité tout en optimisant la qualité perçue.

Le document CN119037275A présente un procédé de sécurité pour la conduite de nuit basé sur le réglage intelligent de l'éclairage intérieur. Ce procédé comprend les étapes suivantes : détection d'un changement rapide de la pupille du conducteur et d'une déviation de la vision, surveillance d'un seuil d'intensité lumineuse extérieure ; si tel est le cas, détermination d'un éclairage insuffisant et augmentation de l'intensité lumineuse du tableau de bord et de la console centrale ; surveillance d'un seuil d'intensité lumineuse extérieure ; si tel est le cas, réduction de l'éclairage intérieur ; sinon, rappel de la vigilance du conducteur.

Le document GB2626135A décrit un système de commande de luminosité d'info divertissement pour un véhicule. Le système comprend un dispositif de traitement configuré avec un module de détection de regard pré-entraîné, et un module d'apprentissage. Le dispositif de traitement est configuré pour déterminer, sur la base d'images de la ou des régions oculaires d'un utilisateur, un lacet et un pas indiquant une direction du regard de l'utilisateur pour une trame en temps réel, et des trames temporelles précédentes. Le dispositif de traitement estime en outre une direction de regard suivante de l'utilisateur sur la base des directions de regard déterminées pour la trame en temps réel, et des trames temporelles précédentes. Le dispositif de traitement ajuste la luminosité d'un dispositif d'affichage du dispositif d'info divertissement à un niveau prédéfini sur la base d'un chevauchement entre le dispositif d'affichage du dispositif d'info divertissement, et la direction de regard suivante estimée.

Le document CN118505580A propose un procédé de détection de reflets sur les vitres d'un véhicule. Ce procédé comprend les étapes suivantes : acquisition d'une image de l'environnement de conduite actuel, détermination de la présence ou non d'une image miroir générée par le reflet du module d'affichage embarqué sur la vitre du véhicule ; détection de la luminosité de l'éclairage ambiant dans l'habitacle actuel et de la luminosité de réflexion de l'image miroir, et détermination du caractère dangereux de l'image miroir sur la base d'une comparaison de luminosité entre ces deux valeurs ; et, lorsqu'il est déterminé que l'image miroir est dangereuse, émission d'un message d'alerte.

Or, ce mode de fonctionnement conduit à réduire l'intensité lumineuse de dispositifs lumineux dans de nombreux cas. Lorsque le dispositif lumineux apporte un éclairage d'ambiance, la qualité perçue diminue. Lorsque le dispositif lumineux affiche une information relative à la sécurité, par exemple la vitesse, une diminution d'intensité lumineuse pénalise la sécurité.

Par ailleurs, cette approche implique l'utilisation d'un dispositif porté par l'utilisateur et placé dans son champ de vision. Cela réduit le confort de conduite. Il présente un temps de latence intrinsèque, pénalisant la sécurité. Bien que le dispositif porté permette de mesurer la rotation de la tête, il n'apporte aucune solution lorsque le conducteur tourne le regard sans tourner la tête.

Ladite approche identifie des images miroirs dangereuses, et baisse une intensité lumineuse lorsqu'une image miroir est dans un champ de vision mesuré an-gulairement. D'une part, cette approche conduit à baisser la luminosité dans l'habitacle lorsque la vue réelle du conducteur s'approche de l'image miroir ; sans pour autant porter sur cette image miroir. Dès lors la qualité perçue diminue. D'autre part, cette approche influe sur la luminosité en fonction d'un recouvrement de champ de vision et de la taille de l'image miroir. Dans certains cas, ceci conduit à maintenir le niveau de luminosité alors que le conducteur fixe un objet et que son regard est perturbé par l'image miroir. Cette approche est donc peu précise.

L'invention a pour objectif de répondre à au moins un des problèmes ou inconvénients rencontrés dans l'art antérieur. En particulier, l'invention a pour objectif d'améliorer la sécurité d'un véhicule automobile. L'invention a également pour objectif d'optimiser la qualité perçue, la vision de l'environnement arrière d'un véhicule automobile.

Selon un premier aspect, l'invention propose un véhicule automobile comprenant : un habitacle destiné à recevoir un conducteur dudit véhicule automobile ; un rétroviseur extérieur avec un miroir; une vitre latérale comprenant une zone de sécurité configurée pour permettre une vision du rétroviseur extérieur par le conducteur ; **remarquable en ce que** le véhicule automobile comprend un dispositif lumineux, dans l'habitacle, qui est apte à émettre un rayonnement lumineux se réfléchissant contre la zone de sécurité vers le conducteur ; un système de contrôle du dispositif lumineux, le système de contrôle étant configuré pour détecter un mouvement arrière en regard du miroir ; puis pour réduire une intensité lumineuse du dispositif lumineux.

L'invention améliore la visibilité des rétroviseurs puisqu'elle atténue l'intensité lumineuse à proximité desdits rétroviseurs extérieurs, malgré l'apparition de reflets à leur niveau. Ainsi, l'invention supprime ou limite les phénomènes de reflets contre la vitre latérale qui sont susceptibles de se superposer à la vue arrière fournie par les rétroviseurs.

Préférentiellement, le système de contrôle comprend une caméra intérieure dans l'habitacle et configurée pour acquérir des images du conducteur ; le système de contrôle étant configuré pour identifier des mouvements de regard du conducteur via la caméra intérieure ; pour réduire ladite intensité lumineuse lorsque ledit système de contrôle identifie un mouvement de regard du conducteur vers le miroir.

Préférentiellement, le véhicule automobile comprend une zone d'angle mort en regard du rétroviseur extérieur ; le système de contrôle comprend un module de détection de véhicule tiers dans la zone d'angle mort ; le système de contrôle étant configuré pour réduire une intensité lumineuse du dispositif lumineux lorsque le module de détection détecte un véhicule tiers dans la zone d'angle mort.

Préférentiellement, le module de détection comprend une caméra extérieure ou un capteur par ondes.

Préférentiellement, le dispositif lumineux est un dispositif d'éclairage linéaire, le véhicule automobile comprenant en outre un écran d'affichage.

Préférentiellement, la vitre latérale comprend une zone arrière en arrière de la zone de sécurité.

Préférentiellement, le véhicule automobile comprend une planche de bord et un ouvrant latéral, le dispositif lumineux étant implanté dans la planche de bord ou dans l'ouvrant latéral.

Préférentiellement, l'habitacle comprend un habillage en tissu, le dispositif lumineux étant implanté dans l'habillage en tissu.

Préférentiellement, l'habitacle comprend un masque avec une face interne et une face externe, le dispositif lumineux étant en regard de la face externe.

Préférentiellement, le système de contrôle est configuré pour détecter un mouvement arrière d'éloignement par rapport au miroir, puis pour augmenter l'intensité lumineuse du dispositif lumineux.

Préférentiellement, la caméra intérieure est dans la planche de bord.

Préférentiellement, le mouvement arrière est un mouvement de rapprochement et/ou un mouvement latéral.

Préférentiellement, le véhicule automobile comprend une structure, une caméra solidaire de la structure et connectée fonctionnellement au système de contrôle.

Préférentiellement, le mouvement arrière est un mouvement de tête du conducteur.

Préférentiellement, le mouvement arrière est un mouvement oculaire du conducteur ou un mouvement de véhicule tiers, plus préférentiellement dans une zone d'angle mort.

Préférentiellement, le mouvement arrière est un mouvement à l'arrière du miroir.

Selon un autre aspect, l'invention propose un véhicule automobile comprenant : un habitacle destiné à recevoir un conducteur dudit véhicule automobile ; un rétroviseur extérieur avec un miroir ; une vitre latérale comprenant une zone de sécurité configurée pour permettre une vision du rétroviseur extérieur par le conducteur ; **remarquable en ce que** le véhicule automobile comprend un dispositif lumineux dans l'habitacle, qui est apte à émettre un rayonnement lumineux se réfléchissant contre la zone de sécurité vers le conducteur ; un système de contrôle du dispositif lumineux, le système de contrôle étant configuré pour détecter un mouvement oculaire du conducteur vers le miroir ; puis pour réduire une intensité lumineuse du dispositif lumineux. Cette solution optimise la sécurité et la qualité perçue en évitant une réflexion au niveau du rétroviseur lorsqu'il est observé, tout en conservant le niveau d'intensité lumineuse dans les autres cas.

Selon un autre aspect, l'invention propose un véhicule automobile comprenant : une zone d'angle mort ; un habitacle destiné à recevoir un conducteur dudit véhicule automobile ; un rétroviseur extérieur avec un miroir ; une vitre latérale comprenant une zone de sécurité configurée pour permettre une vision du rétroviseur extérieur par le conducteur ; **remarquable en ce que** dans l'habitacle le véhicule automobile comprend un dispositif lumineux apte à émettre un rayonnement lumineux se réfléchissant contre la zone de sécurité vers le conducteur ; un système de contrôle du dispositif lumineux, le système de contrôle étant configuré pour détecter une présence d'un véhicule tiers dans la zone d'angle mort ; puis pour réduire une intensité lumineuse du dispositif lumineux. Cette solution améliore la perception de la présence d'un autre véhicule dans l'environnement dudit véhicule automobile.

Selon un autre aspect, l'invention propose un procédé de contrôle dans un habitacle de véhicule automobile ; ledit véhicule automobile comprenant ; un habitacle destiné à recevoir un conducteur dudit véhicule automobile ; un rétroviseur extérieur avec un miroir; une vitre latérale comprenant une zone de sécurité configurée pour permettre une vision du rétroviseur extérieur par le conducteur au travers de la vitre latérale ; **remarquable en ce que** le véhicule automobile comprend un dispositif lumineux dans l'habitacle qui est apte à émettre un rayonnement lumineux se réfléchissant contre la zone de sécurité vers le conducteur ; le procédé de contrôle comprenant les étapes : a) émission du rayonnement lumineux par le dispositif lumineux selon une première intensité lumineuse ; b) détection d'un mouvement arrière en regard du miroir ; puis c) émission du rayonnement lumineux par le dispositif lumineux selon une deuxième intensité lumineuse inférieure à la première intensité lumineuse.

Préférentiellement, l'étape de détection du mouvement arrière est une étape de détection d'un mouvement oculaire du conducteur, ou une étape détection d'un mouvement d'un véhicule tiers.

Préférentiellement, le véhicule automobile est conforme à l'invention.

Selon un autre aspect, l'invention propose un procédé de contrôle de reflet lumineux au niveau d'un rétroviseur extérieur d'un véhicule automobile ; le véhicule automobile comprenant : un habitacle destiné à recevoir un conducteur ; un rétroviseur extérieur avec un miroir réfléchissant apte à réfléchir une vue arrière vers le conducteur ; une vitre latérale avec une zone de recouvrement du rétroviseur extérieur, une zone arrière en arrière de la zone de recouvrement ; un dispositif lumineux apte à émettre un rayonnement lumineux se réfléchissant contre la zone de recouvrement vers le conducteur ; le **procédé de contrôle comprenant les étapes** : émission d'un rayonnement lumineux par le dispositif lumineux, ledit rayonnement se réfléchissant contre la zone de recouvrement vers le conducteur ; détection d'un mouvement arrière vers le miroir du rétroviseur extérieur ; réduction d'intensité lumineuse émise par le dispositif lumineux.

Selon un autre aspect, l'invention propose un programme d'ordinateur comprenant des instructions qui, lorsque le programme est exécuté par un ordinateur, conduisent celui-ci à mettre en œuvre le procédé de contrôle selon l'invention.

Chaque caractéristique introduite par l'expression « préférentiellement » donnée en relation avec l'un des aspects de l'invention s'applique à tous les autres aspects de l'invention.

L'invention sera bien comprise et d'autres aspects et avantages apparaîtront clairement à la lecture de la description qui suit, donnée en référence aux figures annexées et énumérées ci-dessous.

La figure 1 est une vue de profil d'un véhicule automobile selon l'invention.

La figure 2 montre l'intérieur d'un habitacle de véhicule automobile selon l'invention.

La figure 3 est un diagramme d'un procédé de contrôle de dispositif lumineux de véhicule automobile selon l'invention.

Dans la description qui suit, le terme « comprendre » est synonyme de « inclure » et n'est pas limitatif en ce qu'il autorise la présence d'autres éléments dans le véhicule automobile ou d'autres étapes dans le procédé de contrôle auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

Dans la présente description, les caractéristiques techniques sont définies dans la configuration de montage du véhicule automobile, à moins que le contraire ne soit mentionné explicitement.

Au travers de la description, les différentes figures utilisent les mêmes signes de référence pour désigner des entités identiques ou similaires.

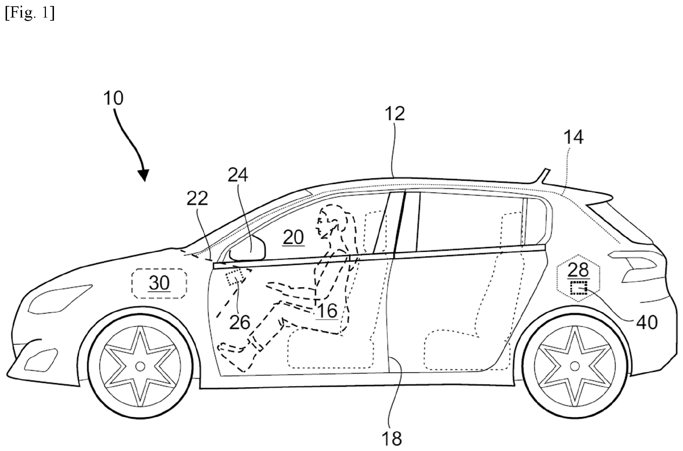

La figure 1 représente un véhicule automobile 10, selon un mode de réalisation de l'invention. Le véhicule automobile 10 comprend des moyens de stockage d'énergie et au moins un moteur (non représentés) adaptés pour entraîner ledit véhicule automobile 10.

Le véhicule automobile 10 comprend une structure 12. La structure 12 forme une caisse extérieure, ou encore une ossature principale du véhicule automobile. La structure 12 délimite différents compartiments du véhicule automobile 10, dont un habitacle 14, également appelé habitacle passager ; le coffre de chargement, le compartiment moteur (non représentés). La structure 12 peut être formée d'un assemblage de tôles embouties et soudées les unes aux autres. L'habitacle 14 loge différents siège, dont un siège avant pour le conducteur 16 (représenté en pointillés). Le conducteur 16 coopère avec les commandes du véhicule automobile 10 afin de le diriger et d'en contrôler la vitesse. Il actionne également certains équipements de sécurité, et des équipements d'info-divertissement. Sa position est généralement prédéfinie dans l'habitacle 14.

La structure 12 relie différentes parties du véhicule automobile 10 dont les ouvrants latéraux 18, tel une porte avant. La structure 12 forme un support de montage pour le groupe motopropulseur, les systèmes de suspension, le système de direction, les systèmes de freinage. Les ouvrants latéraux 18 comprennent des vitres latérales 20.

L'habitacle 14 présente une planche de bord 22, qui est équipée de plusieurs dispositifs lumineux (non représentés). La planche de bord regroupe différents équipements et commandes du véhicule automobile 10. La planche de bord 22 est face au conducteur 16, sous le pare-brise.

Pour la sécurité, le véhicule automobile 10 présente des rétroviseurs extérieurs 24. Les rétroviseurs extérieurs 24 sont montés sur les ouvrants latéraux 18. Ils sont au niveau des vitres latérales 20. Chaque rétroviseur extérieur 24 comprend un boîtier avant et un miroir monté à l'arrière du boîtier avant. Le miroir est réglable en orientation.

Le véhicule automobile 10 comprend une caméra intérieure 26. La caméra intérieure filme le conducteur 16. Elle est préférentiellement couplée à un système de détection de somnolence. La caméra intérieure 26 est couplée à un ordinateur de bord du véhicule automobile 10. La caméra intérieure 26 est couplée fonctionnement à des logiciels permettant de reconnaître le conducteur 16, de reconnaître ses yeux, et d'évaluer la direction de son regard. La direction du regard, comme tout mouvement oculaire, est défini par un axe géométrique.

Le véhicule automobile 10 comprend un module de détection 28 de véhicule dans une zone d'angle mort. Le module de détection 28 est configuré pour identifier des véhicules tiers ou toute autre présence dans la zone d'angle mort. Il reconnaît les véhicules tiers à l'arrêt ou en mouvement par rapport audit véhicule automobile 10. En cas de présence d'un véhicule tiers, le véhicule automobile 10 émet un signal de présence.

Le module de détection 28 comprend une caméra extérieure 40 ou un capteur par ondes (non représenté). La caméra extérieure 40 est reliée à la structure 12 du véhicule automobile. Les images acquises sont directement traitées par les moyens informatiques embarqués par le véhicule automobile 10. Cet aspect accélère la rapidité de transmission et de traitement de l'information. Le capteur par ondes émet des ondes sonores et mesure leur retour suite à la réflexion contre un obstacle.

Le véhicule automobile 10 comprend un système de contrôle 30 des dispositifs lumineux. Le système de contrôle 30 réduit ou augmente le niveau d'intensité lumineuse des dispositifs lumineux en fonction des reflets qu'ils génèrent et en fonction de la direction du regard du conducteur 16.

Le véhicule automobile peut par exemple être un véhicule automobile particulier ou un véhicule automobile utilitaire.

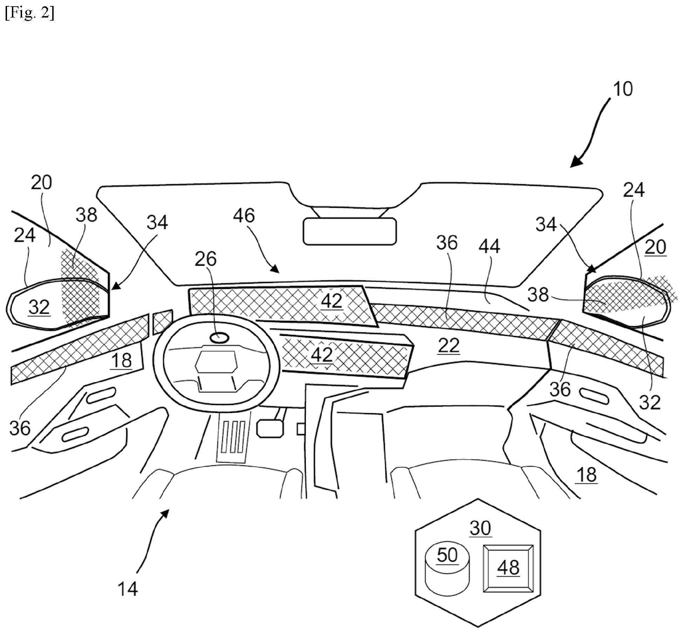

La figure 2 est une vue en perspective vers l'avant, depuis l'intérieur, d'un véhicule automobile 10 selon un mode de réalisation de l'invention. Le véhicule automobile peut correspondre à celui présenté en relation avec la figure 1.

Le véhicule automobile 10 comprend un habitacle 14 destiné à recevoir un conducteur (non représenté) sur un siège avant. Sur chaque côté, le véhicule automobile 10 présente un rétroviseur extérieur 24 avec un miroir 32 présentant une face arrière qui est réfléchissante. Les miroirs 32 sont orientés vers le conducteur. Le rétroviseur extérieur 24 est un rétroviseur latéral.

Le véhicule automobile 10 comprend une vitre latérale 20 présentant une zone de sécurité 34. La vitre latérale 20 est en regard du rétroviseur extérieur 24. La zone de sécurité 34 est un tronçon longitudinal de la vitre latérale 20. Elle est une zone avant. La zone de sécurité 34 est une moitié avant, ou un tier avant. La vitre latérale 20 comprend une zone arrière, à l'arrière de la zone de sécurité 34. La zone de sécurité 34 est configurée pour permettre une vision du rétroviseur extérieur 24 par le conducteur. La zone de sécurité 34 est une zone de recouvrement, qui recouvre généralement le rétroviseur extérieur du point de vue du conducteur. Elle est une zone de retro vision.

Dans l'habitacle 14, le véhicule automobile 10 comprend au moins un dispositif lumineux 36 apte à émettre un rayonnement lumineux se réfléchissant contre la zone de sécurité 34 vers le conducteur. Le conducteur perçoit alors une image réfléchie 38 qui se superpose à l'image issue du miroir 32 du rétroviseur extérieur 24. L'image réfléchie 38 est d'autant plus perceptible que la luminosité de l'environnement baisse ; notamment de nuit. Cette image réfléchie 38 est susceptible de perturber la vue du conducteur lorsqu'il regarde dans sa direction. Le véhicule automobile 10 est équipé d'un système de contrôle 30 du dispositif lumineux 36. Le système de contrôle 30 est configuré pour détecter un mouvement arrière en regard du miroir 32 ; puis pour réduire une intensité lumineuse du rayonnement lumineux du dispositif lumineux 36.

Le véhicule automobile 10 comprend une planche de bord 22 et un ouvrant latéral 18 de chaque côté. Le dispositif lumineux 36 est implanté dans la planche de bord 22 ou dans l'un des ouvrants latéraux 18. La planche de bord 22 s'étend transversalement sur toute la largeur de l'habitacle 14.

Le système de contrôle 30 comprend une caméra intérieure 26 dans l'habitacle 14. La caméra intérieure 26 est solidaire de la structure du véhicule automobile 10. La caméra intérieure 26 est dans la planche de bord 22. Elle est par exemple placée au niveau du volant de direction. La caméra intérieure 26 est configurée pour acquérir des images du conducteur. Elle permet de suivre la direction de son regard. Le système de contrôle 30 est configuré pour identifier des mouvements de regard du conducteur et pour réduire l'intensité lumineuse émise par le dispositif lumineux 36 lorsque ledit système de contrôle identifie un mouvement de regard du conducteur vers le miroir 32.

Le véhicule automobile 10 comprend une zone d'angle mort en regard du rétroviseur extérieur 24. La zone d'angle mort est une zone latérale arrière du véhicule. Elle peut être en dehors du champ de vision du conducteur, tel que visualisé via le rétroviseur extérieur 24 associé. La zone d'angle mort est toutefois en regard du miroir 32. Le système de contrôle 30 comprend un module de détection (non représenté) de véhicule tiers susceptible d'être ou d'entrer dans la zone d'angle mort. Le système de contrôle 30 est configuré pour réduire une intensité lumineuse du rayonnement lumineux du dispositif lumineux lorsque le module de détection détecte un véhicule tiers dans la zone d'angle mort.

Cette solution apporte une synergie. D'une part elle signale la présence d'un véhicule à proximité, et d'autre part elle facilite sa vision en baissant la luminosité au niveau du rétroviseur extérieur 24 associé. Elle améliore doublement la sécurité.

Le dispositif lumineux 36 est un dispositif d'éclairage linéaire. Il comprend par exemple un rail de sources lumineuses. Le véhicule automobile 10 comprend en outre un écran d'affichage 42. L'écran d'affichage 42 est agencé dans la planche de bord 22. Il comprend une surface tactile. Il affiche des informations réglementaires, des informations d'état de fonctionnement, des informations de divertissement. Il est en face du conducteur, et se prolonge optionnellement vers le centre. Il est séparé et distinct du dispositif lumineux 36. Selon un mode de réalisation, le véhicule automobile 10 comprend plusieurs écrans d'affichage 42.

Lors de la conception du véhicule automobile, les risques de reflets sur les zones de surfaces vitrées sont connus. Le système de contrôle limite l'intensité lumineuse lors de la détection de mouvement du conducteur pour chaque fonction éclairée en fonction de la lumière du jour, notamment en mode jour et en mode nuit.

Selon une alternative de l'invention, le dispositif lumineux est un écran d'affichage. Lorsqu'un mouvement arrière est détecté, sa luminosité baisse pour en limiter le reflet contre la zone de sécurité. Puisqu'il y a un besoin d'utiliser le rétroviseur extérieur, la priorité est donnée à la visibilité de ce dernier.

L'habitacle 14 comprend un habillage en tissu 44. L'habillage en tissu 44 forme la planche de bord 22 ou l'ouvrant latéral 18. Le dispositif lumineux 36 est implanté dans l'habillage en tissu 44, ce qui améliore la qualité perçue. Selon un mode de réalisation, l'habillage en tissu 44 recouvre le dispositif lumineux 36.

L'habitacle 14 comprend un masque 46 avec une face interne et une face externe. Le masque 46 est opaque. Le masque 46 est un panneau de planche de bord 22. Selon une alternative de l'invention, le masque 46 est formé par l'écran d'affichage 42. Le dispositif lumineux 36 est en regard de la face externe. Cette configuration permet un rétro-éclairage, ce qui procure un éclairage doux en direction du conducteur. Cet éclairage est susceptible de se réfléchir contre la zone de sécurité 34 de la vitre latérale 20.

Le système de contrôle 30 est configuré pour détecter un mouvement arrière d'éloignement par rapport au miroir 32, puis pour augmenter l'intensité lumineuse du rayonnement lumineux du dispositif lumineux 36. Lorsque le regard du conducteur s'éloigne du rétroviseur extérieur 24, ou que le véhicule tiers s'éloigne du rétroviseur extérieur 24, le dispositif lumineux 36 reprend son niveau lumineux initial.

De manière générale, le mouvement arrière est un mouvement à l'arrière du miroir. Le mouvement arrière est un mouvement de tête du conducteur. Préférentiellement, le mouvement est un mouvement oculaire du conducteur. Le suivi du mouvement oculaire améliore la précision du système de contrôle. Il réduit le nombre de cas de réduction d'intensité lumineuse au juste nécessaire à l'observation du rétroviseur extérieur 24. Toutefois le seuil de déclenchement est direct, quel que soit la différence d'intensité apportée par l'image réfléchie 38.

Le mouvement arrière est un mouvement de rapprochement en face arrière du miroir et/ou un mouvement latéral. De manière générale, le mouvement arrière est un mouvement du conducteur ou un mouvement de véhicule tiers. Le mouvement arrière est considéré dans le référentiel du véhicule automobile.

Selon une option de l'invention, le mouvement arrière est un mouvement oculaire du passager à côté du conducteur. Le passager est susceptible de regarder le rétroviseur extérieur afin d'assister le conducteur.

Le système de contrôle 30 comprend un processeur 48 et une mémoire 50. Il peut être intégré dans l'ordinateur de bord du véhicule automobile. Il peut être couplé au système de détection de somnolence. Il est connecté à chaque dispositif lumineux 36, à la caméra intérieure 26, au module de détection.

Le processeur 48 peut comprendre un ou plusieurs microprocesseurs ou micro-contrôleurs électroniques programmables. De plus, le processeur 48 peut comprendre une unité centrale de traitement (CPU), une mémoire 50 (en plus ou comme la mémoire séparée et illustrée par le numéro de référence 50) et une interface d'entrée/sortie (E/S) à travers laquelle le processeur 48 peut recevoir une pluralité de signaux d'entrée. Une telle interface d'E/S est également configurée pour générer une pluralité de signaux de sortie comprenant, mais sans s'y limiter, ceux utilisés pour contrôler et/ou fournir des données.

La mémoire 50 est prévue pour le stockage de données et d'instructions ou de code (c'est-à-dire un logiciel) pour et lisible et/ou inscriptible par le processeur 48. La mémoire 50 peut comprendre diverses formes de mémoire non volatile (c'est-à-dire non transitoire). La mémoire non volatile comprend une mémoire flash ou mémoire morte (ROM), tout type de mémoire morte programmable (par exemple, PROM, EPROM, EEPROM). La mémoire 50 comprend optionnellement une mémoire volatile, y compris une mémoire vive (RAM), une mémoire vive statique (SRAM), une mémoire vive dynamique à accès aléatoire (DRAM), et une mémoire vive dynamique synchrone (SDRAM). Selon l'invention, la mémoire 50 peut être interne au processeur, ou alternativement former un composant séparé. La mémoire 50 stocke un programme d'ordinateur permettant d'effectuer un procédé de contrôle selon l'invention.

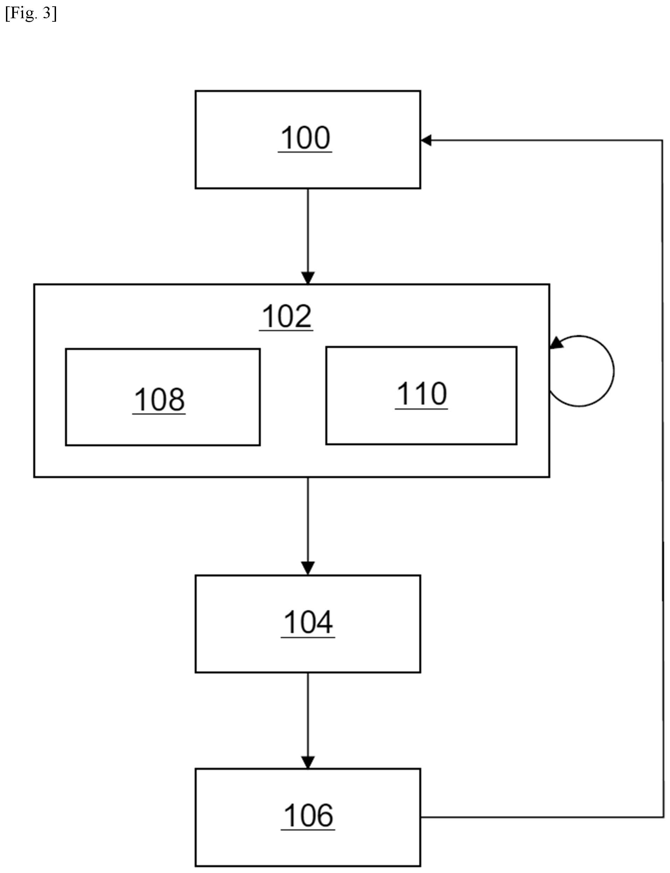

La figure 3 présente un diagramme d'un procédé de contrôle de dispositif lumineux de véhicule automobile, selon un mode de réalisation de l'invention. Le véhicule automobile peut correspondre à celui présenté en relation avec l'une des figures 1 à 2.

Le véhicule automobile comprend ; un habitacle destiné à recevoir un conducteur dudit véhicule automobile ; un rétroviseur extérieur avec un miroir ; une vitre latérale comprenant une zone de sécurité pour que le conducteur puisse voir le rétroviseur extérieur au travers de la vitre latérale. Dans l'habitacle, le véhicule automobile comprend un dispositif lumineux apte à émettre un rayonnement lumineux se réfléchissant contre la zone de sécurité vers le conducteur.

Le procédé de contrôle comprend les étapes suivantes, notamment réalisées dans l'ordre qui suit :
a) émission 100 du rayonnement lumineux par le dispositif lumineux selon une première intensité lumineuse ;
b) détection 102 d'un mouvement arrière en regard du miroir ;
c) émission 104 du rayonnement lumineux par le dispositif lumineux selon une deuxième intensité lumineuse inférieure à la première intensité lumineuse ;
d) détection 106 d'un mouvement arrière d'éloignement en regard du miroir ; puis
a) émission 100 du rayonnement lumineux par le dispositif lumineux selon la première intensité lumineuse.

L'étape a) émission 100 est généralement effectuée lorsque le conducteur regarde vers l'avant ; au travers du pare-brise. Elle correspond à des conditions par défaut de fonctionnement du système de contrôle. Elle apporte une qualité perçue de référence.

L'étape b) détection 102 comprend la réception d'un signal issu de la caméra intérieure, de la caméra extérieure, et/ou du capteur par ondes. Cette étape s'effectue en continu. Elle comprend le traitement du signal et abouti à la détection d'un mouvement arrière lorsque le signal traité remplit un critère de détection.

L'étape b) détection 102 comprend une étape de détection 108 d'un mouvement oculaire du conducteur, ou une étape de détection 110 d'un mouvement d'un véhicule tiers, notamment dans une zone d'angle mort.

L'étape c) émission 104 conduit à abaisser le niveau d'émission lumineuse par le dispositif lumineux. Son alimentation électrique diminue.

L'étape d) détection 106 est un retour à un environnement précédent. Le regard du conducteur quitte le rétroviseur extérieur, et/ou le véhicule tiers quitte la zone d'angle mort. Dès lors, le procédé de contrôle retourne à l'étape initiale : l'étape a) émission 100. Il répète en boucle les étapes précitées.

L'invention comprend la combinaison de tous les modes de réalisation illustrés par toutes les figures.

## Revendications

1. Véhicule automobile (10) comprenant : un habitacle (14) destiné à recevoir un conducteur (16) dudit véhicule automobile (10) ; un rétroviseur extérieur (24) avec un miroir (32) ; une vitre latérale (20) comprenant une zone de sécurité (34) configurée pour permettre une vision du rétroviseur extérieur (24) par le conducteur (16) ; **caractérisé en ce que** le véhicule automobile (10) comprend un dispositif lumineux (36), dans l'habitacle (14), qui est apte à émettre un rayonnement lumineux se réfléchissant contre la zone de sécurité (34) vers le conducteur (16) ; un système de contrôle (30) du dispositif lumineux (36), le système de contrôle (30) étant configuré pour détecter un mouvement arrière en regard du miroir (32) ; puis pour réduire une intensité lumineuse du dispositif lumineux (36).

2. Véhicule automobile (10) selon la revendication 1, **caractérisé en ce que** le système de contrôle (30) comprend une caméra intérieure (26) dans l'habitacle (14) et configurée pour acquérir des images du conducteur (16) ; le système de contrôle (30) étant configuré pour identifier des mouvements de regard du conducteur (16) via la caméra intérieure (26) ; pour réduire ladite intensité lumineuse lorsque ledit système de contrôle (30) identifie un mouvement de regard du conducteur (16) vers le miroir (32).

3. Véhicule automobile (10) selon l'une des revendications 1 à 2, **caractérisé en ce que** le véhicule automobile (10) comprend une zone d'angle mort en regard du rétroviseur extérieur (24) ; le système de contrôle (30) comprend un module de détection (28) de véhicule tiers dans la zone d'angle mort ; le système de contrôle (30) étant configuré pour réduire une intensité lumineuse du dispositif lumineux (36) lorsque le module de détection (28) détecte un véhicule tiers dans la zone d'angle mort.

4. Véhicule automobile (10) selon la revendication 3, **caractérisé en ce que** le module de détection (28) comprend une caméra extérieure (40) ou un capteur par ondes.

5. Véhicule automobile (10) selon l'une des revendications 1 à 4, **caractérisé en ce que** le dispositif lumineux (36) est un dispositif d'éclairage linéaire, le véhicule automobile (10) comprenant en outre un écran d'affichage (42) ; préférentiellement, la vitre latérale (20) comprend une zone arrière en arrière de la zone de sécurité (34).

6. Véhicule automobile (10) selon l'une des revendications 1 à 5, **caractérisé en ce que** le véhicule automobile (10) comprend une planche de bord (22) et un ouvrant latéral (18), le dispositif lumineux (36) étant implanté dans la planche de bord (22) ou dans l'ouvrant latéral (18).

7. Véhicule automobile (10) selon l'une des revendications 1 à 6, **caractérisé en ce que** l'habitacle (14) comprend un habillage en tissu (44), le dispositif lumineux (36) étant implanté dans l'habillage en tissu (44).

8. Véhicule automobile (10) selon l'une des revendications 1 à 7, **caractérisé en ce que** l'habitacle (14) comprend un masque (46) avec une face interne et une face externe, le dispositif lumineux (36) étant en regard de la face externe.

9. Véhicule automobile (10) selon l'une des revendications 1 à 8, **caractérisé en ce que** le système de contrôle (30) est configuré pour détecter un mouvement arrière d'éloignement par rapport au miroir (32), puis pour augmenter l'intensité lumineuse du dispositif lumineux (36).

10. Procédé de contrôle dans un habitacle (14) de véhicule automobile (10) ; ledit véhicule automobile (10) comprenant ; un habitacle (14) destiné à recevoir un conducteur (16) dudit véhicule automobile (10) ; un rétroviseur extérieur (24) avec un miroir (32) ; une vitre latérale (20) comprenant une zone de sécurité (34) configurée pour permettre une vision du rétroviseur extérieur (24) par le conducteur (16) au travers de la vitre latérale (20) ; **caractérisé en ce que** le véhicule automobile (10) comprend un dispositif lumineux (36) dans l'habitacle (14) qui est apte à émettre un rayonnement lumineux se réfléchissant contre la zone de sécurité (34) vers le conducteur (16) ; le procédé de contrôle comprenant les étapes :
• a) émission (100) du rayonnement lumineux par le dispositif lumineux (36) selon une première intensité lumineuse ;
• b) détection (102) d'un mouvement arrière en regard du miroir (32) ; puis
• c) émission (104) du rayonnement lumineux par le dispositif lumineux (36) selon une deuxième intensité lumineuse inférieure à la première intensité lumineuse.
